# EUROPÄISCHE PATENTANMELDUNG

(11) **EP 4 226 768 A2**
(43) Veröffentlichungstag der Anmeldung: **16.08.2023**
(21) Anmeldenummer: 23151273.2
(22) Anmeldetag: 12.01.2023
(51) Int. Cl.: A21C 9/06, A21C 11/10, A21C 11/12

(54) **TEIGSTANZVORRICHTUNG, VERFAHREN ZUM ERZEUGEN EINES TEIGPRODUKTS UND TEIGPRODUKT**

(30) Priorität: 09.02.2022 DE 102022103033
(71) Anmelder: Fritsch Bakery Technologies GmbH & Co. KG, 97348 Markt Einersheim (DE)
(72) Erfinder: Gier, Michael, 97318 Kitzingen (DE)
(74) Vertreter: Grünecker Patent- und Rechtsanwälte PartG mbB

(57) **Zusammenfassung**

Eine Teigstanzvorrichtung (3) zum Abtrennen von Teigstücken (7) aus einem Teigband (6) umfasst eine Unterlage (2), auf die das Teigband (6) auflegbar ist, und eine Klingenanordnung (11), die dazu konfiguriert ist, zumindest in einer im Wesentlichen vertikalen Richtung (V) zu oszillieren und taktweise Hubvorgänge auszuführen. Die Klingenanordnung (11) weist eine erste Gruppe (14) von Klingen (14a) auf, die dazu konfiguriert ist, eine Außenkontur (16) eines abzutrennenden Teigstücks (7) wenigstens teilweise zu erzeugen. Die Teigstanzvorrichtung (3) zeichnet sich dadurch aus, dass die Klingenanordnung (11) eine zweite Gruppe (15) von Klingen (15a) aufweist, die dazu konfiguriert ist, innerhalb der Außenkontur (16) des Teigstücks (7) mindestens einen Schlitz (17) zu erzeugen.

## Beschreibung

Die Erfindung bezieht sich auf Teigstanzvorrichtungen, auf Verfahren zum Erzeugen eines Teigprodukts sowie auf Teigprodukte.

Teigstanzvorrichtungen sind z. B: aus der DE 197 20 689 A1 bekannt. Die dort offenbarte Vorrichtung zur Herstellung von einzelnen Teigstücken aus einer kontinuierlichen Teigbahn umfasst ein Stanzwerkzeug, welches durch einen Pneumatikzylinder zur Ausführung eines Stanzhubs bewegt wird. Aus der EP 3 837 979 A1 ist eine Teigverarbeitungsvorrichtung bekannt, die ein Inzisionsrad mit Klingen zum Einfügen von Inzisionen in ein Teigband umfasst. Damit sollen Inzisionen in einer Schicht eines zweischichtigen Teigbands erzeugen, sodass durch die unterschiedlich gefärbten Teigschichten in einem später aus dem Teigband erzeugten Teigprodukt ein zweifarbiges Muster entsteht. Da die Inzisionen in das ungeschnittene Teigband eingefügt werden, sind deren Positionen relativ zu den nachfolgend erzeugten Teigstücken nicht definiert, sodass die Positionierung des Musters auf dem fertigen Teigprodukt zufällig ist.

Es ist eine Aufgabe der Erfindung, ein verbessertes Verfahren zum Erzeugen eines Teigprodukts sowie eine entsprechende Vorrichtung, insbesondere eine Teigstanzvorrichtung, anzugeben. Diese Aufgabe wird erfindungsgemäß gelöst durch eine Teigstanzvorrichtung mit den Merkmalen des Anspruchs 1 sowie durch ein Verfahren mit den Merkmalen des Anspruchs 7.

Eine weitere Aufgabe der Erfindung ist es, ein gewickeltes Teigprodukt anzugeben, das einen Blick auf die darin enthaltene Füllung ermöglicht. Diese Aufgabe wird durch ein Teigprodukt mit den Merkmalen des Anspruchs 13 gelöst.

Es wird eine Teigstanzvorrichtung zum Abtrennen von Teigstücken aus einem Teigband offenbart. Die Teigstanzvorrichtung umfasst eine Unterlage, auf die das Teigband auflegbar ist, und eine Klingenanordnung, die dazu konfiguriert ist, zumindest in einer im Wesentlichen vertikalen Richtung zu oszillieren und taktweise Hubvorgänge auszuführen. Die Klingenanordnung weist eine erste Gruppe von Klingen auf, die dazu konfiguriert ist, eine Außenkontur eines abzutrennenden Teigstücks wenigstens teilweise zu erzeugen. Die Teigstanzvorrichtung zeichnet sich dadurch aus, dass die Klingenanordnung eine zweite Gruppe von Klingen aufweist, die dazu konfiguriert ist, innerhalb der Außenkontur des Teigstücks mindestens einen Schlitz zu erzeugen.

Dadurch, dass in der Klingenanordnung sowohl eine erste Gruppe von Klingen zum Erzeugen der Außenkontur als auch eine zweite Gruppe von Klingen zum Erzeugen mindestens eines Schlitzes innerhalb der Außenkontur vorgesehen sind, kann der Schlitz relativ zu der Außenkontur genau positioniert werden, sodass seine Anordnung an dem aus dem Teigstück zu erzeugenden Teigprodukt gezielt beeinflusst werden kann.

Im Rahmen der Beschreibung der vorliegenden Erfindung kann eine Gruppe von Klingen eine geeignete Anzahl von Klingen aufweisen. Auch eine einzelne Klinge kann als eine Gruppe von Klingen angesehen werden. Eine bevorzugte Anzahl von Klingen, welche die zweite Gruppe von Klingen bilden kann, ist drei. Klingen im Sinne der Erfindung können unterschiedliche Schneidkantengeometrien aufweisen, z. B. eine gerade Schneidkante, gezahnte Schneidkante oder gewellte Schneidkante.

Es kann vorteilhaft sein, wenn die Klingenanordnung derart konfiguriert ist, dass die erste Gruppe und die zweite Gruppe während desselben Hubvorgangs mit dem bzw. in das Teigband eingreifen. Dadurch kann die Erzeugung der Teigstücke beschleunigt werden, da der Schlitz und die Außenkontur innerhalb desselben Hubvorgangs erzeugt werden können. Besonders günstig kann es sein, wenn die Klingenanordnung derart konfiguriert ist, dass die erste Gruppe und die zweite Gruppe gleichzeitig mit dem Teigband eingreifen. So kann eine weitere Beschleunigung erreicht werden.

Es ist denkbar, dass die zweite Gruppe dazu konfiguriert ist, den mindestens einen Schlitz durch das Teigband hindurchreichend zu erzeugen. Dadurch kann sichergestellt werden, dass der Schlitz sich beim Backen eines aus dem Teigstück erzeugten Produkts aufweitet, sodass eine optional vorhandene Füllung des Produkts freigelegt werden kann. Ein durch das Teigband hindurchreichender Schlitz kann z. B. dadurch erzeugbar sein, dass die zweite Gruppe von Klingen dazu konfiguriert ist, bis auf die Unterlage geführt und/oder mit dieser in Kontakt gebracht zu werden.

Die vorliegende Offenbarung bezieht sich auch auf eine Teigverarbeitungsanlage mit einer Teigstanzvorrichtung der vorstehend beschriebenen Art und mit einer Füllstation, die dazu konfiguriert ist, eine Füllung auf das Teigstück aufzutragen. Vorteilhafterweise kann die Teigverarbeitungsanlage des Weiteren eine Wickelstation umfassen, die dazu konfiguriert ist, das Teigstück aufzuwickeln. Wie weiter oben bereits angedeutet, kann die Teigstanzvorrichtung besonders vorteilhaft bei der Erzeugung von gefüllten, insbesondere gewickelten und gefüllten, Teigprodukten sein.

Die vorliegende Offenbarung bezieht sich auch auf ein Verfahren zum Erzeugen eines Teigprodukts. Das Verfahren umfasst Bereitstellen eines Teigbands auf einer Unterlage und Abtrennen eines Teigstücks von dem Teigband durch eine Klingenanordnung einer Teigstanzvorrichtung. Die Klingenanordnung, ist dazu konfiguriert, zumindest in einer im Wesentlichen vertikalen Richtung zu oszillieren und taktweise Hubvorgänge auszuführen. Eine Außenkontur des Teigstücks wird wenigstens teilweise durch eine erste Gruppe von Klingen der Klingenanordnung erzeugt. Das Verfahren zeichnet sich durch Erzeugen mindestens eines Schlitzes innerhalb der Außenkontur des Teigstücks durch eine zweite Gruppe von Klingen der Klingenanordnung aus.

Es kann vorteilhaft sein, wenn das Abtrennen des Teigstücks und das Erzeugen des Schlitzes während desselben Hubvorgangs erfolgen. Dadurch kann die Erzeugung der Teigstücke beschleunigt werden, da der Schlitz und die Außenkontur innerhalb desselben Hubvorgangs erzeugt werden können. Besonders günstig kann es sein, wenn das Abtrennen des Teigstücks und das Erzeugen des Schlitzes gleichzeitig erfolgen. So kann eine weitere Beschleunigung erreicht werden.

Es ist denkbar, dass der mindestens einen Schlitz durch das Teigband hindurchreichend erzeugt wird. Dadurch kann sichergestellt werden, dass der Schlitz sich beim Backen eines aus dem Teigstück erzeugten Produkts aufweitet, sodass eine optional vorhandene Füllung des Produkts freigelegt werden kann. Ein durch das Teigband hindurchreichender Schlitz kann z. B. dadurch erzeugbar sein, dass die zweite Gruppe von Klingen bis auf die Unterlage geführt und/oder mit dieser in Kontakt gebracht wird.

Es ist vorstellbar, dass das Verfahren des Weiteren ein Auftragen einer Füllung auf das Teigstück umfasst. Besonders günstig kann es sein, wenn das Verfahren des Weiteren ein Aufwickeln des Teigstücks umfasst. Wie weiter oben bereits angedeutet, kann die Teigstanzvorrichtung besonders vorteilhaft bei der Erzeugung von gefüllten, insbesondere gewickelten und gefüllten, Teigprodukten sein.

Die vorliegende Offenbarung bezieht sich außerdem auf ein Teiprodukt mit einem spiralförmig um eine Wickelachse gewickelten Teigstück und einer durch das gewickelte Teigstück umschlossenen Füllung. Das Teigstück weist mindestens einen Schlitz auf, der sich in einem gewickelten Zustand des Teigstücks spiralförmig um die Wickelachse erstreckt. Der Schlitz ist dazu konfiguriert, zumindest nach einem Backen des Teigprodukts die Füllung teilweise freizulegen. Durch ein derartiges Teigprodukt kann die Füllung vor dem Kauf berührungsfrei erkannt werden, was insbesondere bei gewickelten und gefüllten Produkten von Vorteil sein kann. Unter einer Wickelachse kann eine imaginäre Achse verstanden werden, die insbesondere an derjenigen Kante des Teigstücks angeordnet sein kann, an der mit dem Wickelvorgang begonnen wird.

Die Erfindung bezieht sich auf eine Teigstanzvorrichtung, eine Teigverarbeitungsanlage, ein Verfahren zum Erzeugen eines Teigprodukts sowie auf ein Teigprodukt der vorstehend beschriebenen Art. Im Folgenden wird eine Ausführung der Erfindung beispielhaft anhand von Zeichnungen beschrieben.
Figur 1 zeigt eine schematische Seitenansicht einer Teigverarbeitungsanlage.
Figur 2Azeigt eine schematische Frontansicht einer Teigstanzvorrichtung, wobei die Perspektive durch die Linie II-II in Figur 1 angedeutet ist.

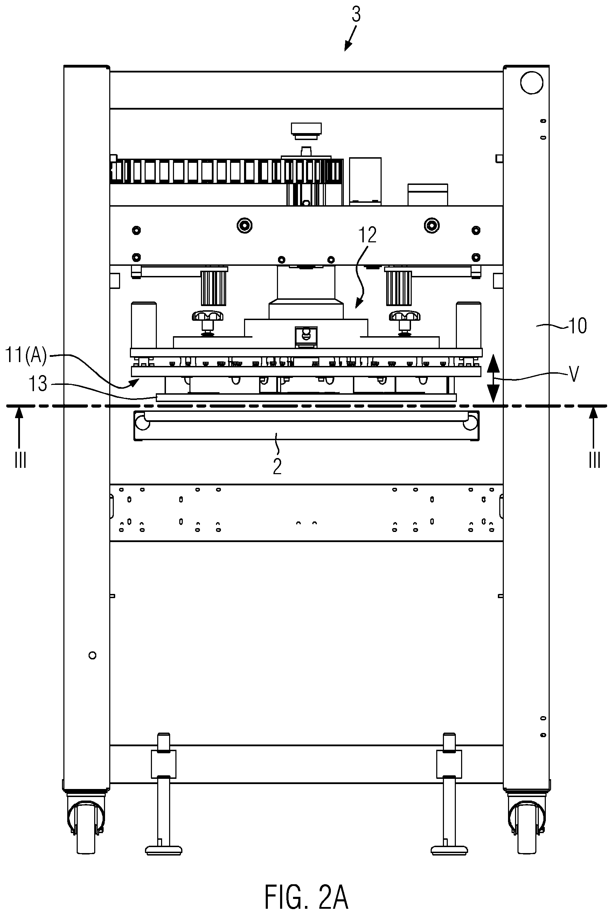

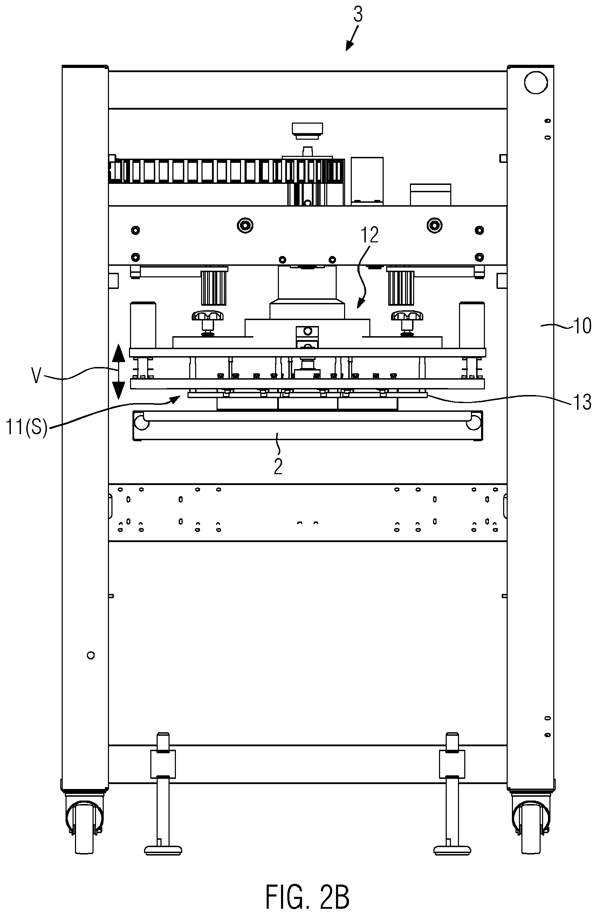

Figur 2Bzeigt die Ansicht aus Figur 2A, wobei eine Klingenanordnung in einer Schneidposition angeordnet ist.

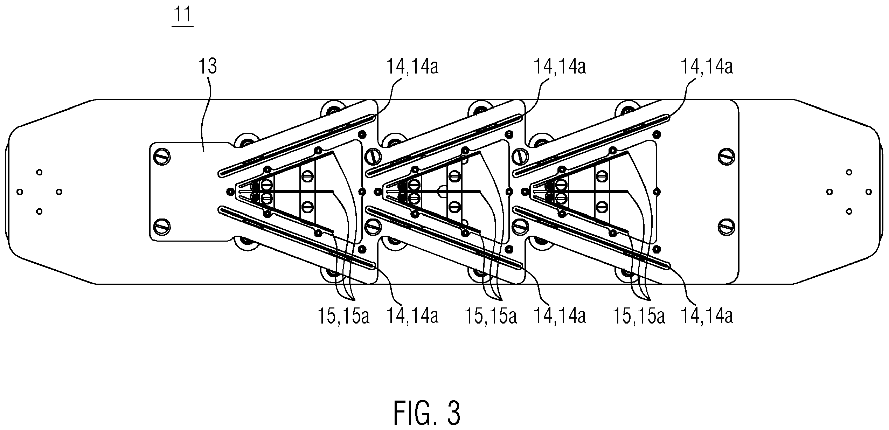

Figur 3 zeigt eine schematische Ansicht von unten einer Klingenanordnung der Teigstanzvorrichtung, wobei die Perspektive durch die Linie III-III in Figur 2A angedeutet ist.

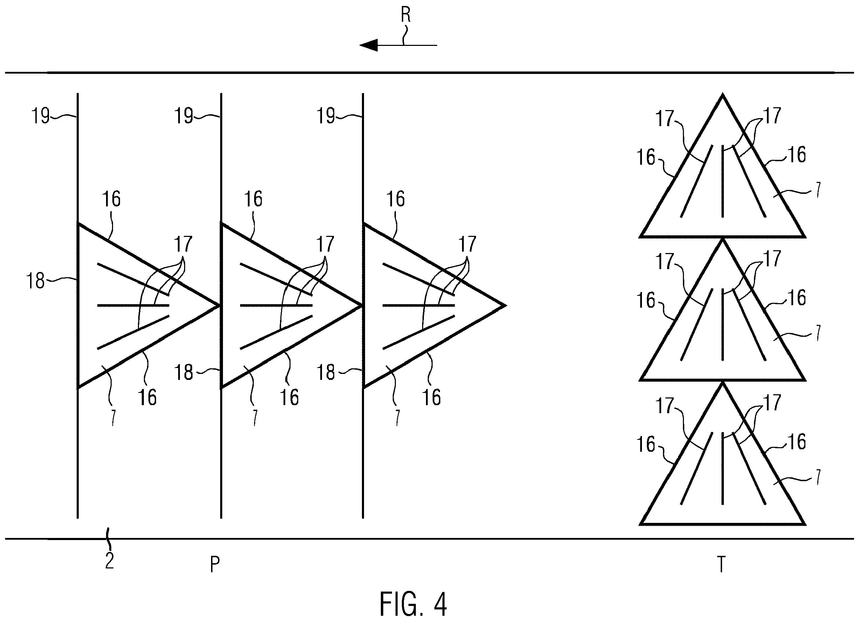

Figur 4 zeigt eine schematische Draufsicht von oben von Teigstücken in einer abgetrennten und einer ausgerichteten Position.

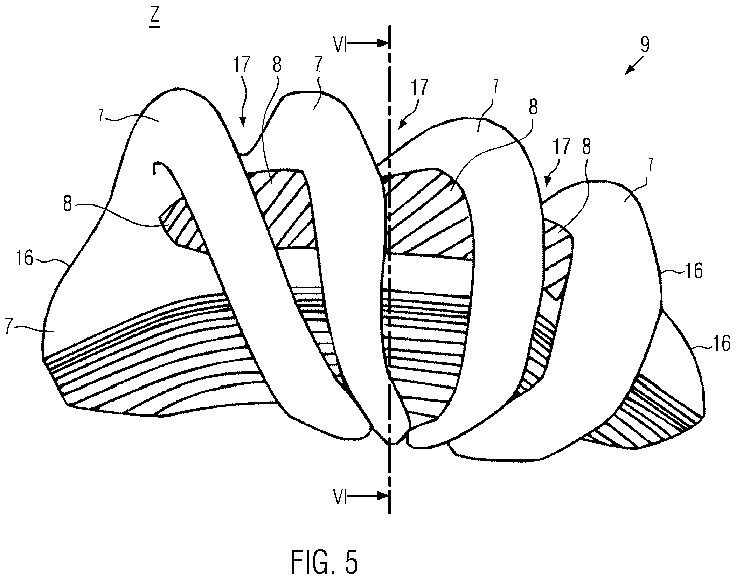

Figur 5 zeigt eine schematische Perspektivansicht eines Teigprodukts.

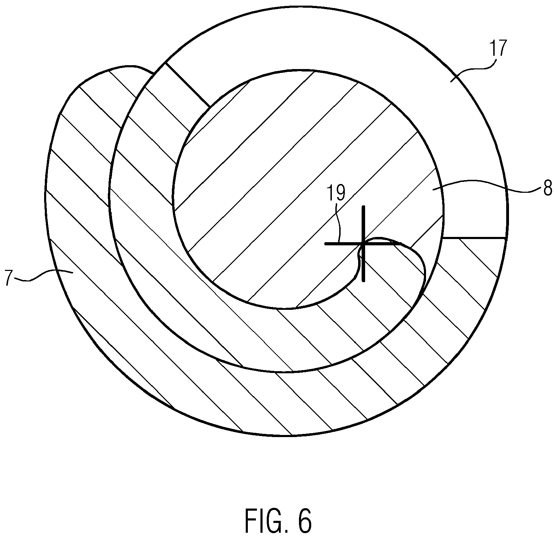

Figur 6 zeigt eine schematische Schnittansicht des Teigprodukts aus Figur 5, wobei die Schnittebene in Figur 5 durch die Schnittlinie VI-VI angedeutet ist.

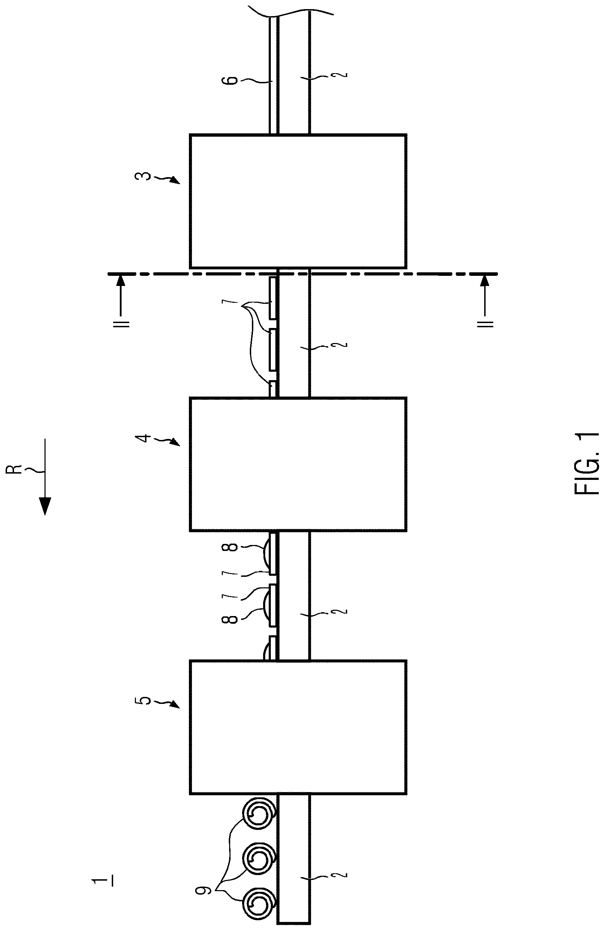

In Figur 1 ist eine Teigverarbeitungsanlage 1 in einer schematischen Seitenansicht dargestellt. Die Teigverarbeitungsanlage 1 kann verschiedene Arbeitsstationen umfassen, die entlang einer Produktionsrichtung R aufeinanderfolgend angeordnet sein können. Des Weiteren kann die Teigverarbeitungsanlage 1 eine oder mehrere Unterlagen 2 umfassen. Auf eine Unterlage 2 kann Teig in verschiedenen Zuständen auflegbar sein. Wie im vorliegenden Ausführungsbeispiel dargestellt, kann die Unterlage 2 bzw. können die Unterlagen 2 als Förderband bzw. Förderbänder ausgeführt sein. Die Teigverarbeitungsanlage 1 kann eine Teigstanzvorrichtung 3 umfassen. Im dargestellten Abschnitt der Teigverarbeitungsanlage 1 kann die Teigstanzvorrichtung 3 die erste Arbeitsstation darstellen. Ein Fachmann erkennt jedoch, dass in der Teigverarbeitungsanlage 1 verschiedene Arbeitsstationen der Teigstanzvorrichtung 3 vorangehen können, zum Beispiel ein Teigbanderzeuger (nicht dargestellt). Die Teigverarbeitungsanlage 1 kann des Weiteren eine Füllstation 4 umfassen. Die Füllstation 4 kann der Teigstanzvorrichtung 3 in Produktionsrichtung R nachfolgend angeordnet sein. Des Weiteren kann die Teigverarbeitungsanlage 1 eine Wickelstation 5 umfassen. Die Wickelstation 5 kann der Teigstanzvorrichtung 3 und oder der Füllstation 4 in Produktionsrichtung R nachfolgend angeordnet sein.

Die Unterlage 2 kann dazu konfiguriert sein, ein Teigband 6 zu fördern. Das Teigband 6 kann auf die Unterlage 2 auflegbar sein. Das Teigband 6 kann dabei durch die Unterlage 2 zunächst an die Teigstanzvorrichtung 3 angeliefert werden. Die Teigstanzvorrichtung 3 kann zum Abtrennen von Teigstücken 7 konfiguriert sein. Die abgetrennten Teigstücke 7 können durch die Unterlage 2 von der Teigstanzvorrichtung 3 zu der Füllstation 4 transportiert werden. Die Füllstation 4 kann dazu konfiguriert sein, eine Füllung 8 auf die Teigstücke 7 aufzutragen. Es kann sich insbesondere um eine pastöse Füllung 8 handeln, zum Beispiel eine Frucht- oder Nusspaste. Anschließend können die Teigstücke 7 mit der aufgetragenen Füllung 8 von der Füllstation 4 zu der Wickelstation 5 transportiert werden. Die Wickelstation 5 kann dazu konfiguriert sein, das Teigstück 7 aufzuwickeln. Insbesondere kann die Wickelstation 5 dazu konfiguriert sein, das Teigstück 7 derart aufzuwickeln, dass die Füllung 8 durch das Teigstück 7 umschlossen wird. Nach dem Wickeln können gewickelte Teigprodukte 9 vorliegen.

In Figur 2 ist die Teigstanzvorrichtung 3 in einer schematischen Frontansicht dargestellt, wobei die Blickrichtung durch die Linie II-II in Figur 1 angedeutet ist. Nun ist zu erkennen, dass die Teigstanzvorrichtung 3 ein Gestell 10 umfassen kann. Das Gestell 10 kann portalartig aufgebaut sein. Die Unterlage 2 kann durch das Gestell 10 hindurch verlaufen. Die Teigstanzvorrichtung 3 kann eine Klingenanordnung 11 umfassen. Die Klingenanordnung 11 kann an einem Werkzeugträger 12 angeordnet sein. Der Werkzeugträger 12 kann beweglich mit dem Gestell 10 verbunden sein. Die Klingenanordnung 11 kann relativ zu dem Gestell 10 und oder dem Werkzeugträger 12 beweglich sein. Insbesondere kann die Klingenanordnung 11 dazu konfiguriert sein, in einer im Wesentlichen vertikalen Richtung V zu oszillieren. Die Klingenanordnung 11 kann einen Abstreifer 13 umfassen. Figur 2A zeigt die Klingenanordnung 11 in einer am oberen Totpunkt angeordneten Position, die im Folgenden auch als Ausgangsposition A bezeichnet werden kann. In Figur 2B ist die gleiche Ansicht dargestellt wie in Figur 2A. Hier ist die Klingenanordnung 11 jedoch in einer Schneidposition S dargestellt. In der Schneidposition S kann die Klingenanordnung 11 gegenüber der Ausgangsposition A in Richtung der Unterlage 2 abgesenkt sein.

In Figur 3 ist eine schematische Ansicht von unten der Klingenanordnung 11 dargestellt. Die Blickrichtung ist durch die Linie III-III in Figur 2 A angedeutet. Es ist der Abstreifer 13 zu erkennen. Des Weiteren ist nun zu erkennen, dass die Klingenanordnung 11 eine erste Gruppe 14 von Klingen 14a umfassen kann. Des Weiteren kann die Klingenanordnung 11 eine zweite Gruppe 15 von Klingen 15a umfassen.

In Figur 4 sind schematische Draufsichten von Teigstücken 7 dargestellt, die durch die Klingenanordnung 11 von dem Teigband 6 abtrennbar sein können. Die Teigstücke 7 können jeweils eine Außenkontur 16 aufweisen. Des Weiteren kann in den Teigstücken 7 jeweils mindestens einen Schlitz 17, im vorliegenden Ausführungsbeispiel drei Schlitze 17, vorgesehen sein. Die Schlitze 17 können, insbesondere vollständig, innerhalb der Außenkontur 16 angeordnet sein. Die Klingenanordnung 11 kann dazu konfiguriert sein, die Teigstücke 7 von dem Teigband 6 abzutrennen. Die erste Gruppe 14 von Klingen 14a kann dazu konfiguriert sein, die Außenkontur 16 zu erzeugen. Die zweite Gruppe 15 von Klingen 15a kann dazu konfiguriert sein, die Schlitze 17 zu erzeugen.

In Figur 4 sind die Teigstücke 7 in unterschiedlichen Positionierungen relativ zu der Produktionsrichtung R dargestellt. Die Teigstücke 7 können zunächst unmittelbar nach dem Abtrennen durch die Klingenanordnung 11 in einer Abtrennposition T angeordnet sein. Danach können sie in eine ausgerichtete Position P geschoben werden. Insbesondere kann die Teigstanzvorrichtung 3 dazu konfiguriert sein, die Teigstücke 7 von der Abtrennposition T in die ausgerichtete Position P zu schieben. Dazu kann der Werkzeugträger 12 beweglich an dem Gestell 10 angeordnet sein. Beispielsweise kann der Werkzeugträger 12 gemäß der Offenbarung der DE 197 20 689 A1, deren Inhalt durch Bezugnahme in die vorliegende Anmeldung aufgenommen wird, konfiguriert sein.

Die ausgerichtete Position P kann ein Aufwickeln der Teigstücke 7 erleichtern. Insbesondere kann eine Wickelkante 18 in Produktionsrichtung R gesehen nach vorne ausgerichtet werden. Die Wickelkante 18 kann diejenige Kante des Teigstücks 7 sein, an der mit einem Wickelvorgang begonnen wird. Eine imaginäre Wickelachse 19 kann entlang der Wickelkante 18 verlaufen. Ein Aufwickeln der Teigstücke 7 kann um die Wickelachse 19 herum erfolgen. Nach dem Verschieben in die ausgerichteten Position P können die Teigstücke 7 zur Füllstation 4 transportiert werden, insbesondere durch die Unterlage 2, im vorliegenden Ausführungsbeispiel das Förderband. Die Füllstation 4 kann dazu konfiguriert sein, die Füllung 8 auf die Teigstücke 7 aufzutragen. Nach einem weiteren Weitertransport durch die Unterlage 2, im vorliegenden Ausführungsbeispiel das Förderband, zu der Wickelstation 5 können durch die Wickelstation 5 Teigprodukte 9 erzeugt werden, indem die Teigstücke 7 an der Wickelkante 18 beginnend um die Wickelachse 19 gewickelt werden.

In Figur 5 ist ein aufgewickeltes Teigprodukt 9 in einer schematischen Perspektivansicht dargestellt. Figur 5 zeigt dabei einen gewickelten Zustand Z des Teigstücks 7. Das Teigprodukt 9 ist in einem gebackenen Zustand dargestellt. Der gebackene Zustand kann sich dadurch auszeichnen, dass die Schlitze 17 sich aufgeweitet haben und die Füllung 8 frei liegt.

In Figur 6 ist eine schematische Schnittansicht des Teigprodukts 9 dargestellt, wobei die Schnittebene in Figur 5 durch die Linie VI-VI angedeutet ist. Die Schnittebene verläuft durch einen der Schlitze 17. Anhand Figur 6 ist erkennbar, dass das Teigstück 7 sich im gewickelten Zustand spiralförmig um die Wickelachse 19 erstrecken kann. Ebenfalls ist zu erkennen, dass sich der Schlitz 17 spiralförmig um die Wickelachse 19 erstrecken kann.

## Patentansprüche

1. Teigstanzvorrichtung (3) zum Abtrennen von Teigstücken (7) aus einem Teigband (6), umfassend:
eine Unterlage (2), auf die das Teigband (6) auflegbar ist,
eine Klingenanordnung (11), die dazu konfiguriert ist, zumindest in einer im Wesentlichen vertikalen Richtung (V) zu oszillieren und taktweise Hubvorgänge auszuführen, wobei die Klingenanordnung (11) eine erste Gruppe (14) von Klingen (14a) aufweist, die dazu konfiguriert ist, eine Außenkontur (16) eines abzutrennenden Teigstücks (7) wenigstens teilweise zu erzeugen,
**dadurch gekennzeichnet, dass** die Klingenanordnung (11) eine zweite Gruppe (15) von Klingen (15a) aufweist, die dazu konfiguriert ist, innerhalb der Außenkontur (16) des Teigstücks (7) mindestens einen Schlitz (17) zu erzeugen.

2. Teigstanzvorrichtung nach Anspruch 1, wobei die Klingenanordnung (11) derart konfiguriert ist, dass die erste Gruppe (14) und die zweite Gruppe (15) während desselben Hubvorgangs mit dem Teigband (6) eingreifen.

3. Teigstanzvorrichtung nach einem der vorangehenden Ansprüche, wobei die Klingenanordnung (11) derart konfiguriert ist, dass die erste Gruppe (14) und die zweite Gruppe (15) gleichzeitig mit dem Teigband (6) eingreifen.

4. Teigstanzvorrichtung nach einem der vorangehenden Ansprüche, wobei die zweite Gruppe (15) dazu konfiguriert ist, den mindestens einen Schlitz (17) durch das Teigband (6) hindurchreichend zu erzeugen.

5. Teigverarbeitungsanlage (1) mit einer Teigstanzvorrichtung (3) nach einem der vorangehenden Ansprüche und mit einer Füllstation (4), die dazu konfiguriert ist, eine Füllung (8) auf das Teigstück (6) aufzutragen.

6. Teigverarbeitungsanlage nach Anspruch 5, des Weiteren umfassend eine Wickelstation (5), die dazu konfiguriert ist, das Teigstück (7) aufzuwickeln.

7. Verfahren zum Erzeugen eines Teigprodukts (9), umfassend:
Bereitstellen eines Teigbands auf einer Unterlage (2),
Abtrennen eines Teigstücks (7) von dem Teigband (6) durch eine Klingenanordnung (11) einer Teigstanzvorrichtung (3), wobei die Klingenanordnung (11), dazu konfiguriert ist, zumindest in einer im Wesentlichen vertikalen Richtung (V) zu oszillieren und taktweise Hubvorgänge auszuführen, und wobei eine Außenkontur (16) des Teigstücks (7) wenigstens teilweise durch eine erste Gruppe (14) von Klingen (14a) der Klingenanordnung (11) erzeugt wird,
**gekennzeichnet durch** Erzeugen mindestens eines Schlitzes (17) innerhalb der Außenkontur (16) des Teigstücks (7) durch eine zweite Gruppe (15) von Klingen (15a) der Klingenanordnung (11).

8. Verfahren nach Anspruch 7, wobei das Abtrennen des Teigstücks (7) und das Erzeugen des Schlitzes (17) während desselben Hubvorgangs erfolgen.

9. Verfahren nach Anspruch 7 oder 8, wobei das Abtrennen des Teigstücks (7) und das Erzeugen des Schlitzes (17) gleichzeitig erfolgen.

10. Verfahren nach einem der Ansprüche 7-9, wobei der mindestens einen Schlitz (17) durch das Teigband (6) hindurchreichend erzeugt wird.

11. Verfahren nach einem der Ansprüche 7-10, des Weiteren umfassend Auftragen einer Füllung (8) auf das Teigstück (7).

12. Verfahren nach einem der Ansprüche 7-11, des Weiteren umfassend Aufwickeln des Teigstücks (7).

13. Teigprodukt (9) mit einem spiralförmig um eine Wickelachse (19) gewickelten Teigstück (7) und einer durch das gewickelte Teigstück (7) umschlossenen Füllung (8), wobei das Teigstück (7) mindestens einen Schlitz (17) aufweist, der sich in einem gewickelten Zustand (Z) des Teigstücks (7) spiralförmig um die Wickelachse (19) erstreckt, und wobei der Schlitz (17) dazu konfiguriert ist, zumindest nach einem Backen des Teigprodukts (9) die Füllung (8) teilweise freizulegen.
